# EUROPEAN PATENT SPECIFICATION

(11) **EP 3 315 186 B1**
(45) Date of publication and mention of the grant of the patent: **27.11.2019**
(21) Application number: 16196413.5
(22) Date of filing: 28.10.2016
(51) Int. Cl.: B01D 53/00, F25J 3/06

(54) **CARBON CAPTURE SYSTEMS COMPRISING COMPRESSORS AND COOLERS**
VORRICHTUNGEN ZUR KOHLENDIOXIDABTRENNUNG UMFASSEND MEHRERE VERDICHTER UND KÜHLER
SYSTÈMES DE CAPTURE DE CARBONE COMPRENANT DES COMPRESSEURS ET DES REFROIDISSEURS

(43) Date of publication of application: 02.05.2018
(73) Proprietor: General Electric Company, Schenectady, NY 12345 (US)
(72) Inventor: WEITZEL, Marcus Jörg, 55252 Wiesbaden (DE); STALLMANN, Olaf, 55252 Wiesbaden (DE); BRITZ, Christian Karl, 55252 Wiesbaden (DE); CARUSO, Andrea, 55252 Wiesbaden (DE)
(74) Representative: DREISS Patentanwälte PartG mbB

(56) References cited:
- WO-A1-2012/114118
- US-A1- 2012 009 075
- US-A1- 2012 285 195

## Description

### BACKGROUND

The present disclosure relates generally to carbon capture systems and methods and, more specifically, to heat removal systems used with carbon capture systems in power generation plants.

At least some known power plants generate energy derived from the combustion of carbon and hydrogen-containing fuels such as coal, oil, peat, waste, biofuel, natural gas, and the like. In addition to carbon and hydrogen, these fuels contain oxygen, moisture, and contaminants. The combustion of such fuels results in the production of a gas stream containing contaminants in the form of ash, carbon dioxide (CO₂), sulfur compounds (often in the forms of sulfur oxides, referred to as "SOx"), nitrogen compounds (often in the form of nitrogen oxides, referred to as "NOx"), chlorine, mercury, and other trace elements.

At least some known power plants use capture systems to facilitate removing contaminants from the gas stream and to reduce their release into the atmosphere. For example, some known carbon capture systems include multiple components that facilitate separating and recovering CO₂ from the gas stream. Said systems may include a heat removal system that includes a plurality of heat exchangers coupled to the carbon capture components to extract heat from the system. The heat removal system typically channels a coolant stream, for example water, from a cold sink such as a cooling tower, to each heat exchanger. After a portion of the heat is transferred to the cooling water, the heat removal system returns the heated water to the cold sink. As a result, each heat exchanger induces a parasitic load on the power plant that results from pumping the cooling water therethrough. Additionally, the heat transferred into the cooling water increases a temperature of the water returned to the cold sink. As such, cooling water losses in open cooling towers are induced, thereby requiring an increased input of make-up cooling water to the cooling tower.

From WO 2012/114118 A1 a process for the low temperature purification of CO₂ is known, wherein CO₂ is separated from a gaseous feed stream comprising at least 30 mol% CO2 and at least one other gas having a lower boiling point than CO₂, the process comprising the steps of:
(i) cooling and partially condensing the feed stream;
(ii) passing the cooled and partially condensed feed stream from step (i) to a vapour-liquid separator to produce a vapour stream having reduced CO2 content relative the feed stream and a liquid stream having increased CO2 content relative to the feed stream;
(iii) dividing the liquid stream from step (ii) into at least two streams; and
(iv) expanding and heating at least one of the at least two streams from step (iii); wherein cooling in step (i) is provided at least in part by heat exchange during heating of the liquid stream in step (iv).

From US 2012/009071 A1 systems for efficiently compressing a gas are known. In one embodiment, the system includes a carbonous gas compression system and a vapor absorption chiller (VAC). The carbonous gas compression system comprises a compressor configured to compress the carbonous gas. The VAC is configured to circulate a coolant through at least one coolant path through the carbonous gas compression system. Utilization of the VAC may aid in cooling the carbonous gas, which may allow for less energy to be expended by the compression system.

### BRIEF DESCRIPTION

In one aspect, a carbon capture system for processing a stream of flue gas according to claim 1 is provided.

In another aspect, a power plant system according to claim 10 is provided.

Also described is a method of assembling a carbon capture system configured to process a stream of flue gas. The method includes coupling a multi-stage flue gas compressor upstream from a multi-stage carbon dioxide compressor. The flue gas compressor includes at least a first intercooler and an aftercooler, and the carbon dioxide compressor includes at least a second intercooler and a turndown cooler. The method also includes coupling a carbon dioxide condenser downstream from the carbon dioxide compressor. The method further includes coupling a first coolant line in flow communication to the first intercooler, to the second intercooler, and to the carbon dioxide condenser. The first coolant line is configured to facilitate removing heat from the flue gas stream using a first coolant stream. The method additionally includes coupling a second coolant line in flow communication to at least one of the aftercooler and the turndown cooler. The second coolant line is configured to facilitate removing heat from the flue gas stream using a second coolant stream formed from one of the first coolant streams discharged from the first intercooler, the second intercooler, and the carbon dioxide condenser.

### BRIEF DESCRIPTION OF THE DRAWINGS

FIG. 1 is a first section of a schematic diagram of a carbon capture system which is not in accordance with the present invention.
FIG. 2 is a second section of the schematic diagram of the carbon capture system shown in FIG. 1 (not according to the present invention) and matched along the A-B-C-D references;
FIG. 3 is a first section of a schematic diagram of another exemplary carbon capture system;
FIG. 4 is a second section of the schematic diagram of the carbon capture system shown in FIG. 3 and matched along the A-B-C-D references;
FIG. 5 is a first section of a schematic diagram of a yet another exemplary carbon capture system;
FIG. 6 is a second section of the schematic diagram of the carbon capture system shown in FIG. 5 and matched along the A-B-C-D-E references;
FIG. 7 is a first section of a flow diagram of an exemplary method of assembling a carbon capture system, such as the carbon capture systems shown in FIGs. 1-6; and
FIG. 8 is a second section of the flow diagram of the method of assembling the carbon capture system and matched along the A reference.

### DETAILED DESCRIPTION OF THE INVENTION

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Approximating language may be applied to modify any quantitative representation that could permissibly vary without resulting in a change in the basic function to which it is related. Accordingly, a value modified by a term or terms, such as "about," "approximately," and "substantially," is not to be limited to the precise value specified. In at least some instances, the approximating language may correspond to the precision of an instrument for measuring the value. Here and throughout the specification and claims, range limitations may be identified. Such ranges may be combined and/or interchanged, and include all the sub-ranges contained therein unless context or language indicates otherwise.

Additionally, unless otherwise indicated, the terms "first," "second," etc. are used herein merely as labels, and are not intended to impose ordinal, positional, or hierarchical requirements on the items to which these terms refer.

Embodiments of the present disclosure relate to systems and methods that facilitate removing heat from a carbon capture system of a power plant. In the exemplary embodiments, the carbon capture system includes a series of compressors, driers, purifiers, and heat exchangers that separate carbon dioxide (CO₂) product for recycling and/or storage from a stream of flue gas. The heat exchangers, including coolers and condensers, transfer heat from the process stream into a coolant, such as water, that is channeled through the heat exchanger. More specifically, a first coolant line is coupled to a first predetermined set of heat exchangers such that a first coolant stream discharged from a cooling tower is channeled therein for use as a heat transfer medium. Additionally, a second coolant line is coupled to a second set of heat exchangers such that a second coolant stream channeled therethrough is used as a heat transfer medium. In the exemplary embodiments, the second coolant stream is formed from the first coolant stream that is exhausted and recycled from at least one of the first predetermined set of heat exchangers. Both first and second coolant streams are then exhausted back into the cooling tower and replenished. By using the recycled heat transfer medium in the second set of heat exchangers, the exemplary embodiments facilitate enhancing heat removal from the capture system, while reducing a parasitic load induced to the power plant.

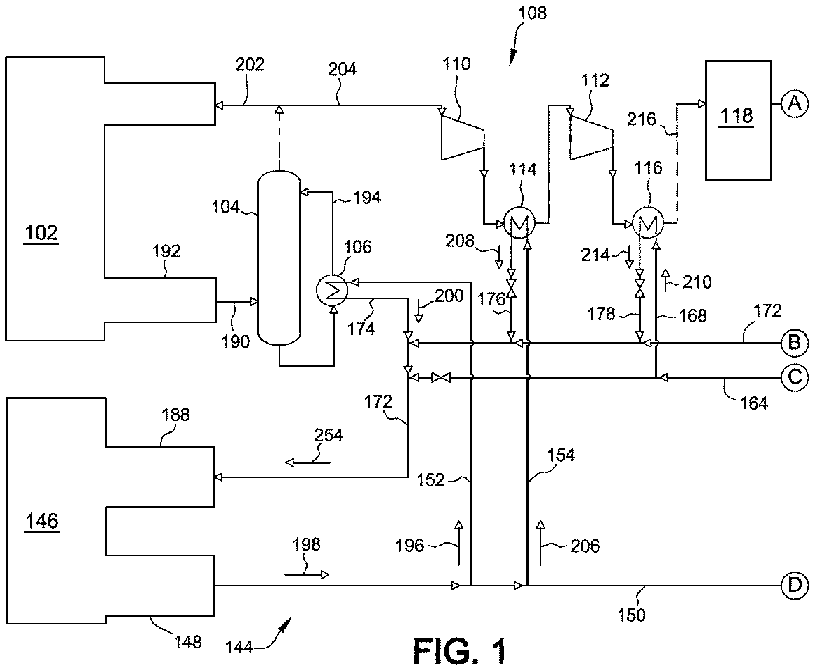

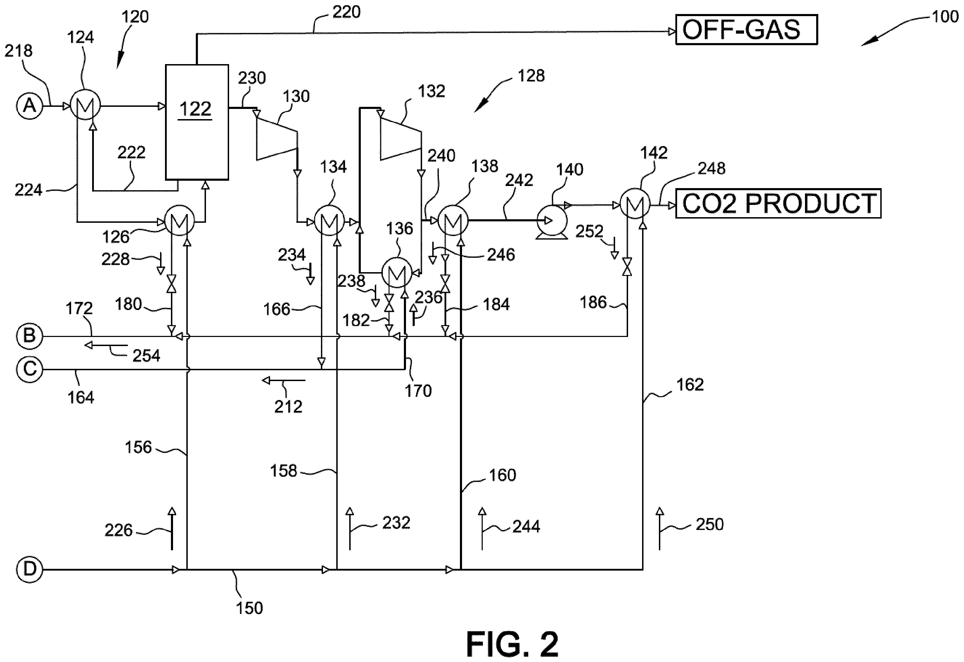

FIG. 1 is a first section of a schematic diagram of a carbon capture system 100 (not according to the invention). FIG. 2 is a second section of the schematic diagram of carbon capture system 100 (not according to the invention) and matched along the A-B-C-D references with FIG. 1. Referring to FIGs. 1 and 2, carbon capture system 100 is coupled to a power plant 102. For example, power plant 102 is an oxy-combustion power plant. In alternative embodiments, power plant 102 may be any other power plant that generates carbon dioxide (CO₂) as described herein.

The carbon capture system 100 includes a direct contact cooler 104 coupled in flow communication with power plant 102. Direct contact cooler 104 includes a heat exchanger recycle cooler 106. Direct contact cooler 104 is coupled in flow communication and is upstream from a multiple stage flue gas compressor 108. Flue gas compressor 108 includes at least one first compressor stage 110 and a final compressor stage 112. FIGs. 1 and 2 illustrate a two-stage flue gas compressor 108, however, it should be recognized that flue gas compressor 108 may include any number of stages, such as, for example, four stages or five stages. Downstream from each first compressor stage 110 is a heat exchanger intercooler 114 coupled thereto. Similarly, downstream from final compressor stage 112 is a heat exchanger aftercooler 116 coupled thereto.

A drier unit 118 is coupled in flow communication downstream from flue gas compressor 108. A CO₂ purification system 120 is coupled in flow communication downstream from drier unit 118. CO₂ purification system 120 includes a purification unit 122, a heat exchanger flue gas cooler 124, and a heat exchanger chilled water cooler 126. A multiple stage CO₂ compressor 128 is coupled in flow communication downstream from CO₂ purification system 120. CO₂ compressor 128 includes at least one first compressor stage 130 and a final compressor stage 132. Although, FIGs. 1 and 2 illustrate a two-stage CO₂ compressor 128, alternatively, CO₂ compressor 128 may include any number of stages, such as, for example, three stages or four stages. Downstream from each first compressor stage 130 is a heat exchanger intercooler 134. Similarly, downstream from final compressor stage 132 is a heat exchanger turndown cooler 136.

A CO₂ condenser 138 is coupled in flow communication positioned downstream from CO₂ compressor 128. A CO₂ pump 140 is coupled in flow communication downstream from CO₂ condenser 138. Additionally, a CO₂ cooler 142 is coupled in flow communication downstream from CO₂ pump 140.

The carbon capture system 100 also includes a heat removal system 144. Heat removal system 144 includes a cooling tower 146. Cooling tower 146 includes an outlet 148 including a first coolant line 150. First coolant line 150 is coupled in flow communication with recycle cooler 106 via inlet line 152, coupled in flow communication with flue gas compressor intercooler 114 via inlet line 154, and is coupled in flow communication with chilled water cooler 126 via inlet line 156. Moreover, first coolant line 150 is also coupled in flow communication with CO₂ compressor intercooler 134 via inlet line 158, coupled in flow communication with CO₂ condenser 138 via inlet line 160, and coupled in flow communication with CO₂ cooler 142 via inlet line 162.

Heat removal system 144 further includes a second coolant line 164. Second coolant line 164 extends from an exhaust line 166 of CO₂ compressor intercooler 134, and is coupled in flow communication with flue gas compressor aftercooler 116 via inlet line 168, and is coupled in flow communication with CO₂ compressor turndown cooler 136 via inlet line 170. Additionally, heat removal system 144 includes a return line 172 that is coupled in flow communication with recycle cooler 106 via exhaust line 174, coupled in flow communication with flue gas compressor intercooler 114 via exhaust line 176, and that is coupled in flow communication with flue gas compressor aftercooler 116 via exhaust line 178. Moreover, return line 172 is also coupled in flow communication with chilled water cooler 126 via exhaust line 180, coupled in flow communication with CO₂ compressor turndown cooler 136 via exhaust line 182, coupled in flow communication with CO₂ condenser 138 via exhaust line 184, and is coupled in flow communication with CO₂ cooler 142 via exhaust line 186. Return line 172 is also coupled to cooling tower 146 at an inlet 188.

During operation, power plant 102 generates a stream of flue gas 190 that is channeled to carbon capture system 100 after it flows through an air quality control system 192. In the exemplary embodiment, flue gas stream 190 has a high concentration of CO₂, in addition to, but not limited to, nitrogen, water vapor, nitrogen oxides (NOx), and sulfur oxides (SOx). In carbon capture system 100, flue gas stream 190 is initially channeled through direct contact cooler 104 which facilitates extracting heat therefrom, as well as, condensing water and reducing concentrations of emissions from flue gas stream 190. For example, direct contact cooler 104 includes a quench water flow 194 that functions as a heat transfer media. To increase the condensation of water from flue gas stream 190, quench water flow 194 is channeled through recycle cooler 106 such to facilitate transferring heat to a portion 196 of a first coolant stream 198. Recycle cooler 106 receives coolant stream 196 channeled through inlet line 152 from first coolant line 150. Heat is transferred from quench water flow 194 to coolant stream 196, and an exhaust stream 200 is discharged from return line 172 via exhaust line 174. The first coolant stream 198 includes water that is channeled from cooling tower outlet 148 and that is at a first predetermined temperature. After flue gas stream 190 flows through direct contact cooler 104, a portion 202 of flue gas stream 190 is returned back to power plant 102 for recirculation in a boiler (not shown). Another portion 204 of flue gas stream 190 is channeled to flue gas compressor 108 for further CO₂ processing.

After receiving flue gas stream 204, flue gas compressor 108 pressurizes and compresses flue gas stream 204. To extract heat from flue gas stream 204 and to increase a density thereof, flue gas stream 204 is channeled through flue gas compressor intercooler 114 and through aftercooler 116. Intercooler 114 receives a portion 206 of first coolant stream 198 via inlet line 154 and transfers heat from flue gas stream 204 to coolant stream 206. Intercooler 114 also channels an exhaust stream 208 to return line 172 via exhaust line 176. Aftercooler 116 receives a portion 210 of a second coolant stream 212 channeled from CO₂ compressor intercooler 134, as discussed in more detail below. Coolant stream 210 is channeled through inlet line 168, receives heat from flue gas stream 204, and is discharged as an exhaust stream 214 to return line 172 via exhaust line 178.

Drier unit 118 receives a compressed flue gas stream 216 from flue gas compressor 108 and facilitates removing any remaining water vaper entrained therein, such that a dry flue gas stream 218 is discharged therefrom. Dry flue gas stream 218 typically includes a majority of CO₂, however, dry flue gas stream 218 may also include nitrogen, oxygen, and other gases. As such, downstream from drier unit 118, CO₂ purification system 120 facilitates separating CO₂ from dry flue gas stream 218. For example, dry flue gas stream 218 is channeled through flue gas cooler 124 where heat is extracted therefrom. Dry flue gas stream 218 is then channeled to CO₂ purification unit 122 wherein the CO₂ product condenses at a temperature above the condensation temperatures of the nitrogen and oxygen gases. Off gases 220, for example nitrogen and oxygen, are exhausted and a liquid CO₂ stream 222 discharged from CO₂ purification unit 122 is channeled to flue gas cooler 124 for use as a coolant to extract heat from dry flue gas stream 218. At flue gas cooler 124, liquid CO₂ stream 222 is vaporized 224 using heat received from dry flue gas stream 218. Vaporized CO₂ 224 is then channeled through chilled water cooler 126 such that heat is transferred to first coolant stream 198. For example, chilled water cooler 126 receives a portion 226 of first coolant stream 198 through inlet line 156, transfers heat from vaporized CO₂ 224 to coolant stream 226, and discharges an exhaust stream 228 out to return line 172 via exhaust line 180. Vaporized CO₂ 224 is then returned to CO₂ purification unit 122.

CO₂ purification unit 122 discharges a CO₂ gas stream 230 at a lower pressure from the purification process to CO₂ compressor 128. CO₂ compressor 128 receives CO₂ gas stream 230 and pressurizes and compresses CO₂ gas stream 230. To extract heat from CO₂ gas stream 230 and to increase a density thereof, CO₂ gas stream 230 is channeled through CO₂ compressor intercooler 134 and CO₂ turndown cooler 136. Intercooler 134 receives a portion 232 of first coolant stream 198 through inlet line 158, transfers heat from CO₂ gas stream 230 to coolant stream 232, and discharges an exhaust stream 234 to second coolant line 164 via exhaust line 166. The intercooler exhaust stream 234 is recycled and used as second coolant stream 212 for use in flue gas compressor aftercooler 116 and turndown cooler 136. In some embodiments, exhaust stream 234 is mixed with first coolant stream 198 to reduce the temperature of second coolant stream 212. Turndown cooler 136 receives a portion 236 of second coolant stream 212 that is channeled from intercooler 134 through inlet line 170, transfers heat from CO₂ gas stream 230 to coolant stream 236, and discharges an exhaust stream 238 to return line 172 via exhaust line 182. The turndown cooler 136 is operated only during system 100 start-up and/or partial load operations. Further, by using a higher temperature coolant stream 236, condensation of CO₂ gas stream 230 is reduced.

CO₂ condenser 138 receives a compressed CO₂ gas stream 240 for use in condensing compressed stream 240 to form a CO₂ liquid stream 242 that is channeled downstream. CO₂ condenser 138 receives a portion 244 of first coolant stream 198 through inlet line 160, transfers heat from compressed CO₂ gas stream 240 to coolant stream 244, and discharges an exhaust stream 246 to return line 172 via exhaust line 184. From CO₂ condenser 138, CO₂ liquid stream 242 is channeled through CO₂ pump 140 and then through CO₂ cooler 142 to facilitate heat removal again before CO₂ product 248 is ready for downstream transportation, storage, or further use. CO₂ cooler 142 receives a portion 250 of first coolant stream 198 through inlet line 162, transfers heat from CO₂ liquid stream 242 to coolant stream 250, and discharges an exhaust stream 252 to return line 172 via exhaust line 186.

Return line 172 combines of the exhausted streams into one exhaust stream 254 along with any portion of unused second coolant stream 212 from second coolant line 164, and channels the resulting exhaust stream 254 back to cooling tower outlet 148. Exhaust stream 254 is at a second predetermined temperature at cooling tower inlet 188. More specifically, in the exemplary embodiment, exhaust stream 254 is returned to cooling tower 146 within a predetermined temperature difference of first coolant stream 198 extracted from cooling tower 146. For example, exhaust stream 254 may be within a temperature difference of 10° Kelvin of first coolant stream 198 at cooling tower outlet 148. As such, heat removal system 144 conserves a coolant replenishment stream (not shown) that facilitates replenishing cooling tower 146 cooling liquid and reducing the temperature of first coolant stream 198 at outlet 148.

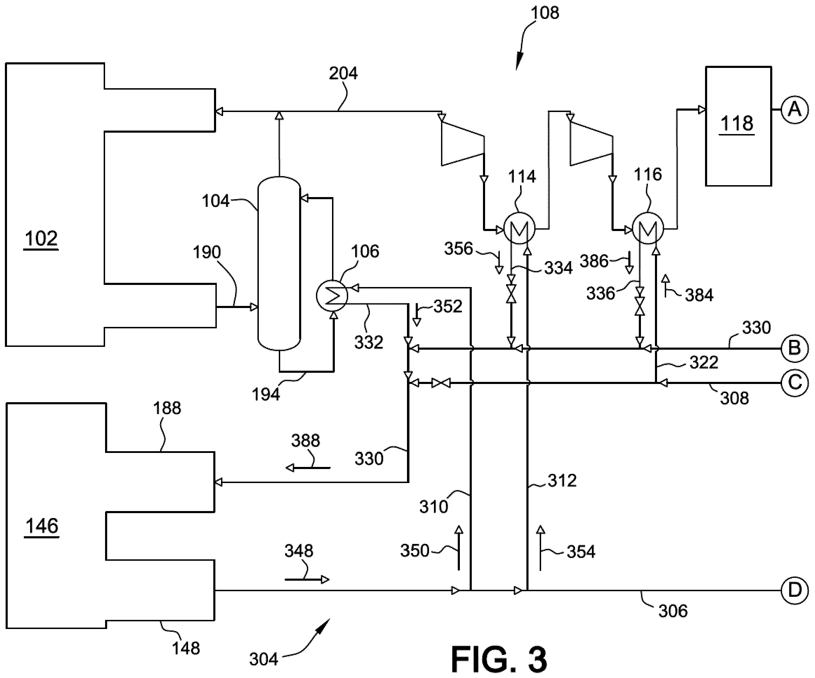

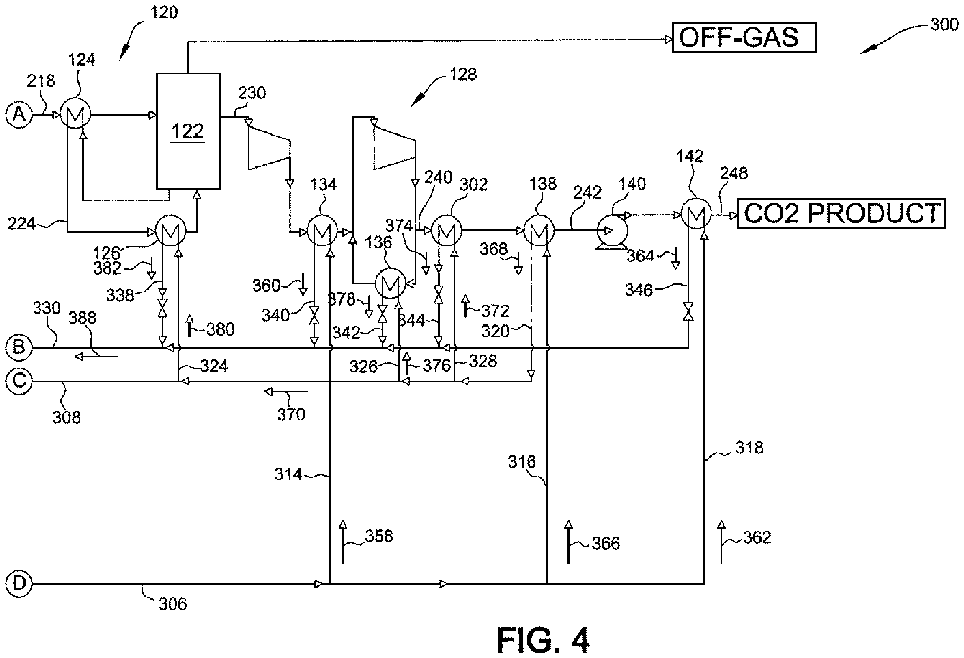

FIG. 3 is a first section of a schematic diagram of a carbon capture system according to the invention. FIG. 4 is a second section of the schematic diagram of carbon capture system 300 and matched along the A-B-C-D references with FIG. 3. Referring to FIGs. 3 and 4, in the exemplary embodiment, carbon capture system 300 is similar to carbon capture system 100 (shown in FIGs. 1 and 2) in that flue gas stream 190 from oxy-combustion power plant 102 is channeled through a series of compressors, driers, purifiers, and heat exchangers to process flue gas stream 190 into CO₂ product 248. For example, carbon capture system 300 includes direct contact cooler 104 that extracts heat from flue gas stream 190 and condensing water entrained therein, reducing concentrations of emissions. From direct contact cooler 104, flue gas stream 204 is pressurized via flue gas compressor 108 and then dried via drier unit 118. Dry flue gas stream 218 is then purified into CO₂ gas stream 230 at CO₂ purification system 120 before being channeled downstream and pressurized via CO₂ compressor 128.

In the exemplary embodiment, carbon capture system 300 includes a CO₂ desuperheater 302 coupled in flow communication downstream from CO₂ compressor 128 and coupled in flow communication upstream from CO₂ condenser 138. CO₂ desuperheater 302 extracts heat from compressed CO₂ gas stream 240 discharged from CO₂ compressor 128. Furthermore, carbon capture system 300 includes CO₂ pump 140 and CO₂ cooler 142.

Carbon capture system 300 also includes a heat removal system 304. Heat removal system 304 is similar to heat removal system 144 (shown in FIGs. 1 and 2) in that heat removal system 304 includes a first coolant line 306 and a second coolant line 308 that facilitates recycling coolant therein. First coolant line 306 is coupled to cooling tower 146 at outlet 148. Additionally, first coolant line 306 is coupled in flow communication with recycle cooler 106 via an inlet line 310, coupled in flow communication with flue gas compressor intercooler 114 via an inlet line 312, and is coupled in flow communication with CO₂ compressor intercooler 134 via an inlet line 314. Moreover, first coolant line 306 is also coupled in flow communication with CO₂ condenser 138 via an inlet line 316, and coupled in flow communication with CO₂ cooler 142 via an inlet line 318.

In the exemplary embodiment, second coolant line 308 extends from an exhaust line 320 of CO₂ condenser 138. Second coolant line 308 is further coupled in flow communication with flue gas compressor after cooler 116 via an inlet line 322, coupled in flow communication with chilled water cooler 126 via an inlet line 324, coupled in flow communication with CO₂ compressor turndown cooler 136 via an inlet line 326, and also coupled in flow communication with CO₂ desuperheater 302 via an inlet line 328.

Additionally, heat removal system 304 includes a return line 330 that is coupled in flow communication with recycle cooler 106 via an exhaust line 332, coupled in flow communication with flue gas compressor intercooler 114 via an exhaust line 334, coupled in flow communication with flue gas compressor aftercooler 116 via an exhaust line 336, and is coupled in flow communication with chilled water cooler 126 via an exhaust line 338. Moreover, return line 330 is also coupled in flow communication with CO₂ compressor intercooler 134 via an exhaust line 340, coupled in flow communication with CO₂ compressor turndown cooler 136 via an exhaust line 342, coupled in flow communication with CO₂ desuperheater 302 via an exhaust line 344, and is coupled in flow communication with CO₂ cooler 142 via an exhaust line 346. Return line 330 is also coupled to cooling tower 146 at inlet 188.

During operation, a first coolant stream 348 is channeled through first coolant line 306 at a first predetermined temperature and directed towards a first set of predetermined heat exchangers. For example, a portion 350 of first coolant stream 348 is channeled through inlet line 310, receives heat from quench water flow 194 at recycle cooler 106, and discharges an exhaust stream 352 via exhaust line 332 to return line 330. A portion 354 of first coolant stream 348 is channeled through inlet line 312, receives heat from flue gas stream 204 at flue gas compressor intercooler 114, and discharges an exhaust stream 356 via exhaust line 334 to return line 330. A portion 358 of first coolant stream 348 is channeled through inlet line 314, receives heat from CO₂ gas stream 230 at CO₂ compressor intercooler 134, and discharges an exhaust stream 360 via exhaust line 340 to return line 330. Additionally, a portion 362 of first coolant stream 348 is channeled through inlet line 318, receives heat from CO₂ liquid stream 242 at CO₂ cooler 142, and discharges an exhaust stream 364 via exhaust line 346 to return line 330.

Moreover, a portion 366 of first coolant stream 348 is channeled through inlet line 316, receives heat from compressed CO₂ gas stream 240 at CO₂ condenser 138, and discharges an exhaust stream 368 via exhaust line 320 to second coolant line 308. As such, exhaust stream 368 is used as a second coolant stream 370 through second coolant line 308 and directed towards a second set of predetermined heat exchangers. In some embodiments, exhaust stream 368 of CO₂ condenser 138 is mixed with first coolant stream 348 to lower the temperature of second coolant stream 370. For example, a portion 372 of second cooling stream 370 is channeled through inlet line 328, receives heat from compressed CO₂ gas stream 240 at CO₂ desuperheater 302, and discharges an exhaust stream 374 via exhaust line 344 to return line 330. A portion 376 of second cooling stream 370 is channeled through inlet line 326, receives heat from CO₂ gas stream 230 at CO₂ compressor turn down cooler 136, and discharges an exhaust stream 378 via exhaust line 342 to return line 330. A portion 380 of second cooling stream 370 is channeled through inlet line 324, receives heat from vaporized CO₂ stream 224 at chilled water cooler, and discharges an exhaust stream 382 via exhaust line 338 to return line 330. Additionally, a portion 384 of second cooling stream 370 is channeled through inlet line 322, receives heat from flue gas stream 204 at flue gas compressor aftercooler 116, and discharges an exhaust stream 386 via exhaust line 336 to return line 330.

Return line 330 combines the exhausted streams into an exhaust stream 388 along with any portion of unused second coolant stream 370 from second coolant line 308, and channels the resulting exhaust stream 388 back to cooling tower inlet 188. In the exemplary embodiment, exhaust stream 388 is returned to cooling tower 146 within a predetermined temperature difference of first coolant stream 348 extracted from cooling tower 146. For example, exhaust stream 388 within a temperature difference of 10° Kelvin of first coolant stream 348 at cooling tower outlet 148. As such, heat removal system 304 conserves a coolant replenishment stream (not shown) that facilitates replenishing cooling tower 146 cooling liquid and reducing the temperature of first coolant stream 348 at outlet 148.

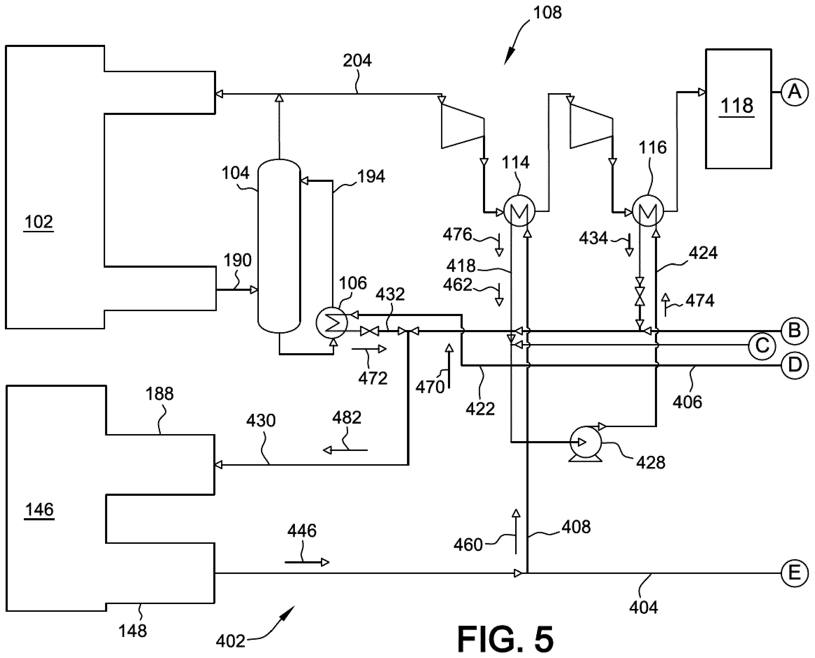

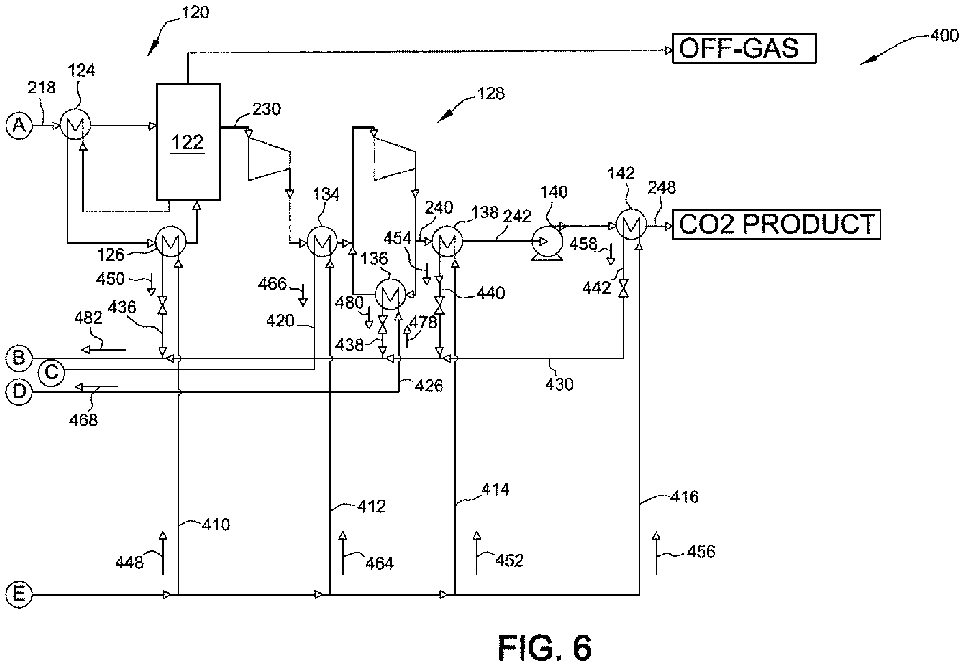

FIG. 5 is a first section of a schematic diagram of a yet another exemplary carbon capture system 400. FIG. 6 is a second section of the schematic diagram of carbon capture system 400 and matched along the A-B-C-D-E references with FIG. 5. Referring to FIGs. 5 and 6, in the exemplary embodiment, carbon capture system 400 is similar to carbon capture systems 100 and 300 (shown in FIGs. 1-4) in that flue gas stream 190 from oxy-combustion power plant 102 is channeled through a series of compressors, driers, purifiers, and heat exchangers to process flue gas stream 190 into CO₂ product 248. For example, carbon capture system 400 includes direct contact cooler 104 that extracts heat from flue gas stream 190 and condensing water entrained therein, reducing concentrations of emissions. From direct contact cooler 104, flue gas stream 204 is pressurized via flue gas compressor 108 and then dried via drier unit 118. Dry flue gas stream 218 is then purified into CO₂ gas stream 230 at CO₂ purification system 120 before being channeled downstream and pressurized via CO₂ compressor 128. Compressed CO₂ gas stream 240 is then channeled through CO₂ condenser 138, CO₂ pump 140, and CO₂ cooler 142.

In the exemplary embodiment, carbon capture system 400 also includes a heat removal system 402. Heat removal system 402 is similar to heat removal systems 144 and 304 (shown in FIGs. 1-4) in that heat removal system 402 includes a first coolant line 404 and a second coolant line 406 that facilitates recycling cooling liquid therein. First coolant line 404 is coupled to cooling tower 146 at outlet 148. Additionally, first coolant line 404 is coupled in flow communication with flue gas compressor intercooler 114 via an inlet line 408, and is coupled in flow communication with chilled water cooler 126 via an inlet line 410. Moreover, first coolant line 404 is also coupled in flow communication with CO₂ compressor intercooler 134 via an inlet line 412, coupled in flow communication with CO₂ condenser 138 via an inlet line 414, and is coupled in flow communication with CO₂ cooler 142 via an inlet line 416.

In the exemplary embodiment, second coolant line 406 extends from an exhaust line 418 of flue gas compressor intercooler 114 and an exhaust line 420 of CO₂ compressor intercooler 134. Second coolant line 406 is further coupled in flow communication with recycle cooler 106 via an inlet line 422, coupled in flow communication with flue gas compressor aftercooler 116 via an inlet line 424, and also coupled in flow communication with CO₂ compressor turndown cooler 136 via an inlet line 426. Additionally, second coolant line 406 includes a booster pump 428.

Heat removal system 402 includes a return line 430 that is coupled in flow communication with recycle cooler 106 via an exhaust line 432, coupled in flow communication with flue gas compressor aftercooler 116 via an exhaust line 434, and is coupled in flow communication with chilled water cooler 126 via an exhaust line 436. Moreover, return line 430 is also coupled in flow communication with CO₂ compressor turndown cooler 136 via an exhaust line 438, coupled in flow communication with CO₂ condenser 138 via an exhaust line 440, and is coupled in flow communication with CO₂ cooler 142 via an exhaust line 442. Return line 430 is also coupled to cooling tower 146 at inlet 188.

During operation, a first coolant stream 446 is channeled through first coolant line 404 at a first predetermined temperature and directed towards a first set of predetermined heat exchangers. For example, a portion 448 of first coolant stream 446 is channeled through inlet line 410, receives heat from vaporized CO₂ stream 224 at chilled water cooler 126, and discharges an exhaust stream 450 via exhaust line 436 to return line 430. A portion 452 of first coolant stream 446 is channeled through inlet line 414, receives heat from compressed CO₂ gas stream 240 at CO₂ condenser 138, and discharges an exhaust stream 454 via exhaust line 440 to return line 430. Additionally, a portion 456 of first coolant stream 446 is channeled through inlet line 416, receives heat from CO₂ liquid stream 242 at CO₂ cooler 142, and discharges an exhaust stream 458 via exhaust line 442 to return line 430.

Moreover, a portion 460 of first coolant stream 446 is channeled through inlet line 408, receives heat from flue gas stream 204 at flue gas compressor intercooler 114, and discharges an exhaust stream 462 via exhaust line 418 to second coolant line 406. Also, a portion 464 of first coolant stream 446 is channeled through inlet line 416, receives heat from CO₂ gas stream 230 at CO₂ compressor intercooler 134, and discharges an exhaust stream 466 via exhaust line 420 to second coolant line 406. As such, exhaust streams 462 and 466 are used as a second coolant stream 468 through second coolant line 406 and directed towards a second set of predetermined heat exchangers. In the exemplary embodiments, booster pump 428 facilitates channeling second coolant stream 468 through second coolant line 406. In some embodiments, exhaust streams 462 and 466 are mixed with first coolant stream 446 to lower the temperature of second coolant stream 468. For example, a portion 470 of second cooling stream 468 is channeled through inlet line 422, receives heat from quench water flow 194 at recycle cooler 106, and discharges an exhaust stream 472 via exhaust line 432 to return line 430. A portion 474 of second cooling stream 468 is channeled through inlet line 424, receives heat from flue gas stream 204 at flue gas compressor aftercooler 116, and discharges an exhaust stream 476 via exhaust line 434 to return line 430. Additionally, a portion 478 of second cooling stream 468 is channeled through inlet line 426, receives heat from CO₂ gas stream 230 at CO₂ compressor turndown cooler 136, and discharges an exhaust stream 480 via exhaust line 438 to return line 430.

Return line 430 combines the exhausted streams into an exhaust stream 482 along with any portion of unused second coolant stream 468 from second coolant line 406, and channels the resulting exhaust stream 482 back to cooling tower inlet 188. In the exemplary embodiment, exhaust stream 482 is returned to cooling tower 146 within a predetermined temperature difference of first coolant stream 446 extracted from cooling tower 146. For example, exhaust stream 482 is within a temperature difference of 10° Kelvin of first coolant stream 446 at cooling tower outlet 148. As such, heat removal system 402 conserves a coolant replenishment stream (not shown) that facilitates replenishing cooling tower 146 cooling liquid and reducing the temperature of first coolant stream 446 at outlet 148.

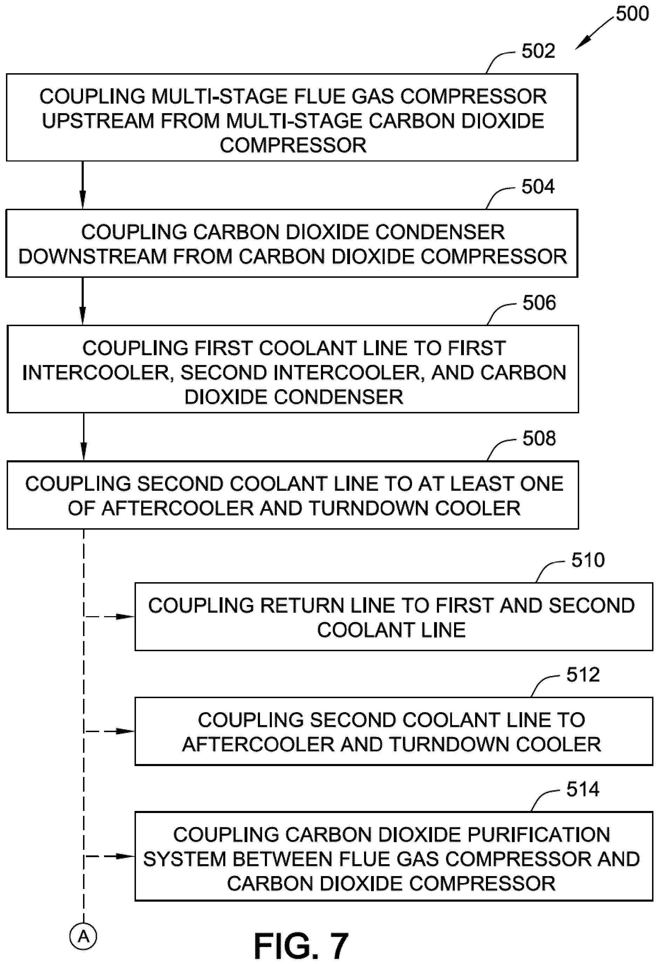

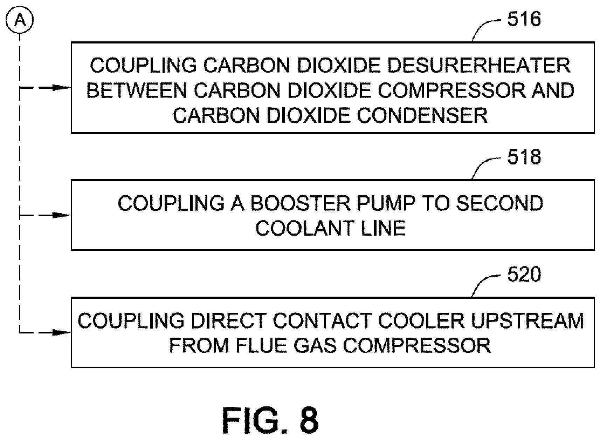

FIG. 7 illustrates a first section of an exemplary method 500 of assembling a carbon capture system, such as carbon capture systems 100, 300, or 400 (shown in FIGs. 1-6). FIG. 8 is a second section of the method 500 of assembly the carbon capture system and matched along the A reference with FIG. 7. Referring to FIGs. 7 and 8 and with reference also to FIGs. 1-6, in the exemplary method 500, a multi-stage flue gas compressor, such as flue gas compressor 108, is coupled 502 upstream from a multi-stage CO₂ compressor, such as CO₂ compressor 128. The flue gas compressor includes at least one first intercooler, such as flue gas compressor intercooler 114, and an aftercooler, such as flue gas compressor aftercooler 116. The CO₂ compressor includes at least one second intercooler, such as CO₂ compressor intercooler 134, and a turndown cooler, such as CO₂ compressor turndown cooler 136.

A CO₂ condenser, such as CO₂ condenser 138, is coupled 504 downstream from CO₂ compressor. A first coolant line, such as first coolant lines 150, 306, or 404, is coupled 506 in flow communication to the at least one first intercooler, the at least one second intercooler, the CO₂ condenser. A second coolant line, such as second coolant lines 164, 308, or 406, is coupled 508 in flow communication to at least one of the aftercooler and the turndown cooler.

In some embodiments, a return line, such as return line 172, 330, or 430, is coupled 510 in flow communication to the first and second coolant lines. In other embodiments, the second coolant line is coupled 512 in flow communication to both the aftercooler and the turndown cooler. In certain embodiments, a CO₂ purification system, such as CO₂ purification system 120, is coupled 514 between the flue gas compressor and the CO₂ compressor. The CO₂ purification system includes a chilled water cooler, such as chilled water cooler 126, that is coupled to the second coolant line.

In other embodiments, a CO₂ desuperheater, such as CO₂ desuperheater 302, is coupled 516 between the CO₂ compressor and the CO₂ condenser. The CO₂ desuperheater is coupled to the second coolant line. In certain embodiments, a booster pump, such as booster pump 428, is coupled 518 to the second coolant line. In some embodiments, a direct contact cooler, such as direct contact cooler 104, is coupled 520 upstream from the flue gas compressor. The direct contact cooler includes a recycle cooler, such as recycle cooler 106, which is coupled to the second coolant line.

The above-described systems and methods provide an efficient method for removing heat from a carbon capture system of a power plant. More specifically, a first coolant line is coupled to a first predetermined set of heat exchangers such that a first coolant stream discharged from a cooling tower is channeled therein for use as a heat transfer medium. Additionally, a second coolant line is coupled to a second set of heat exchangers such that a second coolant stream channeled therethrough is used as a heat transfer medium. In the exemplary embodiments, the second coolant stream is formed from the first coolant stream that is exhausted and recycled from at least one of the first predetermined set of heat exchangers. Both first and second coolant streams are then exhausted back into the cooling tower and replenished. By using the recycled heat transfer medium in the second set of heat exchangers, the exemplary embodiments facilitate enhancing heat removal from the capture system, while reducing a parasitic load induced to the power plant.

In the exemplary embodiments, the first set of heat exchangers coupled to the first coolant line facilitates limiting the amount of heat transferred to the first coolant stream. As such, a portion of the first coolant stream exhausted from the first set of heat exchangers is recycled and used as a second coolant stream for the second set of heat exchangers coupled to the second coolant line. By recycling a portion of the first coolant stream, a total amount of coolant pumped through the heat removal system is reduced. Additionally, the second set of heat exchangers coupled to the second coolant line facilitates limiting the amount of heat transferred to the second coolant stream. As such, the exhaust coolant stream channeled back into the cooling tower is maintained within a predetermined temperature difference from the first coolant stream. By maintaining the predetermined temperature difference between cooling tower output and input, coolant loss at the cooling tower is reduced further reducing the total amount of coolant. By reducing the total amount of coolant used within the heat removal system, the parasitic load of the heat removal system to the power plant is reduced because less coolant is pumped therethrough.

The systems and methods described herein are not limited to the specific embodiments described herein. The scope of the present invention is defined by the appended claims.

## Claims

1. A carbon capture system (100;300;400) for processing a stream of flue gas (190), said system comprising:
a multi-stage flue gas compressor (108) comprising at least a first intercooler (114) and an aftercooler (116);
a multi-stage carbon dioxide compressor (128) downstream from said flue gas compressor (108), said carbon dioxide compressor comprising at least a second intercooler (134) and a turndown cooler (136);
a carbon dioxide condenser (138) downstream from said carbon dioxide compressor (128);
a first coolant line (150;306;404) coupled in flow communication to said first intercooler (114), to said second intercooler (134), and to said carbon dioxide condenser (138), said first coolant line (150;306;404) removing heat from the flue gas stream (190) using a first coolant stream (198;348;446);
a second coolant line (164;308;406) coupled in flow communication to at least one of said aftercooler (116) and said turndown cooler (136), said second coolant line (164;308;406) removing heat from the flue gas stream (190) using a second coolant stream (212;370;468) formed from one of the first coolant streams (150;306;404) discharged from said first intercooler (114), said second intercooler (134), and said carbon dioxide condenser (138); and
a carbon dioxide purification system (120) between said flue gas compressor (108) and said carbon dioxide compressor (128), said carbon dioxide purification (120) system comprising a chilled water cooler (126), said chilled water cooler (126) coupled in flow communication to said second coolant line (308) such that the second coolant stream (370) is channeled therethrough.

2. The system (100;300;400) of Claim 1 further comprising a return line (172;330;430) coupled in flow communication to said first (150;306;404) and second (164;308;406) coolant lines, said return line (172;330;430) configured to channel discharged first (198;348;446) and second (164;308;406) coolant streams to a cooling tower (146) after passing through a gas compressor intercooler (114), a flue gas compressor aftercooler (116) a chilled water cooler (126,), a CO₂ compressor turndown cooler (136), a CO₂ condenser (138), and a CO₂ cooler (142).

3. The system (100) of any of Claims 1 or 2, wherein said second coolant line (164) is configured to receive the first coolant stream (198) discharged from said second intercooler (134), said second coolant line (164) coupled in flow communication to said aftercooler (116) and said turndown cooler (136).

4. The system (300) of any of Claims 1 to 3, wherein said second coolant line (308) is configured to receive the first coolant stream (348) discharged from said carbon dioxide condenser (138), said second coolant line (308) coupled in flow communication to said aftercooler (116) and said turndown cooler (136).

5. The system (300) of Claims 4 further comprising a carbon dioxide desuperheater (302) between said carbon dioxide compressor (128) and said carbon dioxide condenser (138), said carbon dioxide desuperheater (302) coupled in flow communication to said second coolant line (308) such that the second coolant stream (370) is channeled therethrough.

6. The system (400) of any of Claims 1 to 5, wherein said second coolant line (406) is configured to receive the first coolant stream (446) discharged from said first (114) and second (134) intercoolers, said second coolant line (406) coupled in flow communication to said aftercooler (116) and said turndown cooler (136), said second coolant line (406) comprising a booster pump (428) configured to increase pressure of the second coolant stream (468).

7. The system (400) of Claim 6 further comprising a direct contact cooler system (104) upstream from said flue gas compressor (108), said direct contact cooler system (104) comprising a recycle cooler (106) coupled in flow communication to said direct contact cooler system (104) such that a quench water flow (194) is channeled therethrough and to said second coolant line (406) such that a portion (470) of the second coolant stream (468) is channeled therethrough.

8. A power plant system (102) comprising:
an oxy-fuel power plant (102) configured to generate a stream of flue gas (190) including carbon dioxide; and
a carbon capture system (100;300;400) according to any one of the preceding claims and coupled in flow communication to said oxy-fuel power plant (102).

9. The system (102) of Claim 8, wherein said carbon capture system (100) comprises said second coolant line (164) configured to receive the first coolant stream (198) discharged from said second intercooler (134), said second coolant line (164) coupled in flow communication to said aftercooler (116) and said turndown cooler (136).

10. The system (102) of any of Claims 8 or 9, wherein said carbon capture system (300) comprises said second coolant line (308) configured to receive the first coolant stream (348) discharged from said carbon dioxide condenser (138), said second coolant line (308) coupled in flow communication to said aftercooler (116) and said turndown cooler (136).

11. The system (102) of any of Claims 8 to 10, wherein said carbon capture system (400) comprises said second coolant line (406) configured to receive the first coolant stream (446) discharged from said first (114) and second (134) intercoolers, said second coolant line (406) coupled in flow communication to said aftercooler (116) and said turndown cooler (136), said second coolant line (406) comprising a booster pump (428) configured to increase pressure of the second coolant stream (468).

## Patentansprüche

1. Kohlenstofferfassungssystem (100; 300; 400) zum Verarbeiten eines Rauchgasstroms (190), wobei das System umfasst:
einen mehrstufigen Rauchgaskompressor (108) mit mindestens einem ersten Zwischenkühler (114) und einem Nachkühler (116);
einen mehrstufigen Kohlendioxidkompressor (128), welcher dem besagten Rauchgaskompressor (108) nachgeschaltet ist, wobei der Kohlendioxidkompressor mindestens einen zweiten Zwischenkühler (134) und einen Turndown-Kühler (136) aufweist;
einen Kohlendioxidkondensator (138), der dem besagten Kohlendioxidkompressor (128) nachgeschaltet ist;
eine erste Kühlmittelleitung (150; 306; 404), die in Strömungsverbindung mit dem besagten ersten Zwischenkühler (114), dem besagten zweiten Zwischenkühler (134) und dem besagten Kohlendioxidkondensator (138) verbunden ist, wobei die besagte erste Kühlmittelleitung (150; 306; 404) Wärme aus dem Rauchgasstrom (190) unter Verwendung eines ersten Kühlmittelstroms (198; 348; 446) entfernt;
eine zweite Kühlmittelleitung (164; 308; 406), die in Strömungsverbindung mit mindestens einem von den besagten Nachkühlern (116) und dem besagten Turndown-Kühler (136) gekoppelt ist, wobei die besagte zweite Kühlmittelleitung (164; 308; 406) Wärme aus dem Rauchgasstrom (190) unter Verwendung eines zweiten Kühlmittelstroms (212; 370; 468) entfernt, welcher aus einem der ersten Kühlmittelströme (150; 306; 404), die aus dem besagten ersten Zwischenkühler (114), dem besagten zweiten Zwischenkühler (134) und dem besagten Kohlenstoffdioxydkondensator (138) gebildet sind, ausgelassen wird; und
ein Kohlendioxidreinigungssystem (120) zwischen dem besagten Rauchgaskompressor (108) und dem besagten Kohlendioxidkompressor (128), wobei das besagte Kohlendioxidreinigungssystem (120) einen Kühlwasserkühler (126) umfasst, wobei der besagte Kühlwasserkühler (126) in Strömungsverbindung mit der besagten zweiten Kühlmittelleitung (308) gekoppelt ist, sodass der zweite Kühlmittelstrom (370) dadurch geleitet wird.

2. System (100; 300; 400) nach Anspruch 1, ferner umfassend eine Rücklaufleitung (172; 330; 430) in Strömungsverbindung mit der ersten (150; 306; 404) und der zweiten (164; 308; 406) Kühlmittelleitung, wobei die besagte Rückführleitung (172; 330; 430) dafür konfiguriert ist, ausgelassene erste (198; 348; 446) und zweite (164; 308; 406) Kühlmittelströme an einen Kühlturm (146) zu leiten, nachdem sie durch einen Zwischenkühler eines Gaskompressors (114), einen Rauchgaskompressor-Nachkühler (116), einen Kühlwasserkühler (126), einen CO₂-Kompressor-Aufsetzkühler (136), einen CO₂-Kondensator (138) und einen CO₂-Kühler (142) hindurchgelaufen sind.

3. System (100) nach einem der Ansprüche 1 oder 2, wobei die besagte zweite Kühlmittelleitung (164) dafür konfiguriert ist, den ersten Kühlmittelstrom (198), der vom besagten zweiten Zwischenkühler (134) ausgelassen wird, aufzunehmen, wobei die besagte zweite Kühlmittelleitung (164) in Strömungsverbindung mit dem besagten Nachkühler (116) und dem besagten Turndown-Kühler (136) gekoppelt ist.

4. System (300) nach einem der Ansprüche 1 bis 3, wobei die besagte zweite Kühlmittelleitung (308) dafür konfiguriert ist, den ersten Kühlmittelstrom (348), der vom besagten Kohlendioxidkondensator (138) ausgelassen wird, aufzunehmen, wobei die besagte zweite Kühlmittelleitung (308) in Strömungsverbindung mit dem besagten Nachkühler (116) und dem besagten Turndown-Kühler (136) steht.

5. System (300) nach Anspruch 4, ferner umfassend einen Kohlendioxid-Enthitzer (302) zwischen dem besagten Kohlendioxidkompressor (128) und dem besagten Kohlendioxidkondensator (138), wobei der besagte Kohlendioxid-Enthitzer (302) derart in Strömungsverbindung mit der besagten zweiten Kühlmittelleitung (308) gekoppet ist, dass der besagte zweite Kühlmittelstrom (370) dadurch geleitet wird.

6. System (400) nach einem der Ansprüche 1 bis 5, wobei die besagte zweite Kühlmittelleitung (406) dafür konfiguriert ist, den ersten Kühlmittelstrom (446), der vom besagten ersten (114) und dem besagten zweiten (134) Zwischenkühler ausgelassen wird, aufzunehmen, wobei die besagte zweite Kühlmittelleitung (406) in Strömungsverbindung mit dem besagten Nachkühler (116) steht und wobei der besagte Turndown-Kühler (136) die besagte zweite Kühlmittelleitung (406) eine Druckerhöhungspumpe (428) umfasst, die dafür konfiguriert ist, den Druck des zweiten Kühlmittelstroms (468) zu erhöhen.

7. System (400) nach Anspruch 6, ferner umfassend ein Direktkontaktkühlersystem (104), welches dem besagten Rauchgaskompressor (108) nachgeschaltet ist, wobei das Direktkontaktkühlersystem (104) einen Rückführungskühler (106) derart in Strömungsverbindung mit dem besagten Direktkontaktkühlersystem (104) umfasst, dass ein Abschreckwasserstrom (194) dadurch geleitet wird, und derart in Strömungsverbindung mit der besagten zweiten Kühlmittelleitung (406), dass ein Teil (470) des zweiten Kühlmittelstroms (468) dadurch geleitet wird.

8. Kraftwerksystem (102), umfassend:
ein Sauerstoff-Brennstoff-Kraftwerk (102), das dafür konfiguriert ist, einen Rauchgasstrom (190) zu erzeugen, der Kohlendioxid enthält; und
ein Kohlenstoff-Auffangsystem (100; 300; 400) nach einem der vorhergehenden Ansprüche, das in Strömungsverbindung mit dem Sauerstoff-Brennstoff-Kraftwerk (102) steht.

9. System (102) nach Anspruch 8, wobei das besagte Kohlenstoff-Auffangsystem (100) die besagte zweite Kühlmittelleitung (164) umfasst, welche dafür konfiguriert ist, den ersten Kühlmittelstrom (198), der vom besagten zweiten Zwischenkühler (134) ausgelassen wird, aufzunehmen, wobei die besagte zweite Kühlmittelleitung (164) in Strömungsverbindung mit dem besagten Nachkühler (116) und dem besagten Turndown-Kühler (136) steht.

10. System (102) nach einem der Ansprüche 8 oder 9, wobei das besagte Kohlenstoff-Auffangsystem (300) die besagte zweite Kühlmittelleitung (308) umfasst, welche dafür konfiguriert ist, den ersten Kühlmittelstrom (348), der vom besagten Kohlendioxidkondensator (138) ausgelassen wird, aufzunehmen, wobei die besagte zweite Kühlmittelleitung (308) in Strömungsverbindung mit dem besagten Nachkühler (116) und dem besagten Turndown-Kühler (136) steht.

11. System (102) nach einem der Ansprüche 8 bis 10, wobei das besagte Kohlenstoff-Auffangsystem (400) die besagte zweite Kühlmittelleitung (406) umfasst, welche dafür konfiguriert ist, den ersten Kühlmittelstrom (446), der von dem besagten ersten (114) und dem besagten zweiten (134) Zwischenkühler ausgelassen wird, aufzunehmen, wobei die besagte zweite Kühlmittelleitung (406) in Strömungsverbindung mit dem besagten Nachkühler (116) steht und wobei der besagte Turndown-Kühler (136) die besagte zweite Kühlmittelleitung (406) eine Druckerhöhungspumpe (428) umfasst, die dafür konfiguriert ist, den Druck des zweiten Kühlmittelstroms (468) zu erhöhen.

## Revendications

1. Système de captage de carbone (100; 300; 400) pour traiter un courant de gaz de combustion (190), ledit système comprenant:
un compresseur de gaz de combustion à plusieurs étages (108) comprenant au moins un premier refroidisseur intermédiaire (114) et un refroidisseur final (116);
un compresseur de dioxyde de carbone à plusieurs étages (128) en aval dudit compresseur de gaz de combustion (108), ledit compresseur de dioxyde de carbone comprenant au moins un second refroidisseur intermédiaire (134) et un refroidisseur à variation de débit (136);
un condenseur de dioxyde de carbone (138) en aval dudit compresseur de dioxyde de carbone (128);
une première conduite de fluide de refroidissement (150; 306; 404) couplée en communication d'écoulement audit premier refroidisseur intermédiaire (114), audit second refroidisseur intermédiaire (134) et audit condensateur de dioxyde de carbone (138), ladite première conduite de fluide de refroidissement (150; 306; 404) évacuant la chaleur du courant de gaz de combustion (190) en utilisant un premier courant de fluide de refroidissement (198; 348; 446);
une seconde conduite de fluide de refroidissement (164; 308; 406) couplée en communication d'écoulement audit refroidisseur final (116) et/ou audit refroidisseur à variation de débit (136), ladite seconde conduite de fluide de refroidissement (164; 308; 406) évacuant la chaleur du courant de gaz de combustion (190) en utilisant un second courant de fluide de refroidissement (212; 370; 468) formé à partir de l'un des premiers courants de fluide de refroidissement (150; 306; 404) évacués dudit premier refroidisseur intermédiaire (114), dudit second refroidisseur intermédiaire (134) et dudit condenseur de dioxyde de carbone (138); et
un système de purification de dioxyde de carbone (120) entre ledit compresseur de gaz de combustion (108) et ledit compresseur de dioxyde de carbone (128), ledit système de purification de dioxyde de carbone (120) comprenant un refroidisseur d'eau refroidie (126), ledit refroidisseur d'eau refroidie (126) étant couplé en communication d'écoulement à ladite seconde conduite de fluide de refroidissement (308) de sorte que le second courant de fluide de refroidissement (370) soit acheminé à travers celle-ci.

2. Système (100; 300; 400) selon la revendication 1, comprenant en outre une conduite de retour (172; 330; 430) couplée en communication d'écoulement auxdites première (150; 306; 404) et seconde (164; 308; 406) conduites de fluide de refroidissement, ladite conduite de retour (172; 330; 430) étant conçue pour acheminer les premier (198; 348; 446) et second (164; 308; 406) courants de fluide de refroidissement évacués vers une tour de refroidissement (146) après qu'ils ont traversé un refroidisseur intermédiaire de compresseur de gaz (114), un refroidisseur final de compresseur de gaz de combustion (116), un refroidisseur d'eau refroidie (126), un refroidisseur à variation de débit de compresseur de CO₂ (136), un condenseur de CO₂ (138) et un refroidisseur de CO₂ (142).

3. Système (100) selon l'une quelconque des revendications 1 ou 2, dans lequel ladite seconde conduite de fluide de refroidissement (164) est conçue pour recevoir le premier courant de fluide de refroidissement (198) évacué dudit second refroidisseur intermédiaire (134), ladite seconde conduite de fluide de refroidissement (164) étant couplée en communication d'écoulement audit refroidisseur final (116) et audit refroidisseur à variation de débit (136).

4. Système (300) selon l'une quelconque des revendications 1 à 3, dans lequel ladite seconde conduite de fluide de refroidissement (308) est conçue pour recevoir le premier courant de fluide de refroidissement (348) évacué dudit condensateur de dioxyde de carbone (138), ladite seconde conduite de fluide de refroidissement (308) étant couplée en communication d'écoulement audit refroidisseur final (116) et audit refroidisseur à variation de débit (136).

5. Système (300) selon la revendication 4, comprenant en outre un désurchauffeur de dioxyde de carbone (302) entre ledit compresseur de dioxyde de carbone (128) et ledit condenseur de dioxyde de carbone (138), ledit désurchauffeur de dioxyde de carbone (302) étant couplé en communication d'écoulement à ladite seconde conduite de fluide de refroidissement (308) de sorte que le second courant de fluide de refroidissement (370) soit acheminé à travers celui-ci.

6. Système (400) selon l'une quelconque des revendications 1 à 5, dans lequel ladite seconde conduite de fluide de refroidissement (406) est conçue pour recevoir le premier courant de fluide de refroidissement (446) évacué desdits premier (114) et second (134) refroidisseurs intermédiaires, ladite seconde conduite de fluide de refroidissement (406) étant couplée en communication d'écoulement audit refroidisseur final (116) et audit refroidisseur à variation de débit (136), ladite seconde conduite de fluide de refroidissement (406) comprenant une pompe de surpression (428) conçue pour augmenter la pression du second courant de fluide de refroidissement (468) .

7. Système (400) selon la revendication 6, comprenant en outre un système de refroidissement à contact direct (104) en amont dudit compresseur de gaz de combustion (108), ledit système de refroidissement à contact direct (104) comprenant un refroidisseur de recyclage (106) couplé en communication d'écoulement audit système de refroidissement à contact direct (104) de sorte qu'un écoulement d'eau de trempe (194) soit acheminé à travers celui-ci, et à ladite seconde conduite de fluide de refroidissement (406) de sorte qu'une partie (470) du second courant de fluide de refroidissement (468) soit acheminée à travers celui-ci.

8. Système de centrale électrique (102) comprenant:
une centrale à oxycombustion (102) conçue pour générer un courant de gaz de combustion (190) comprenant du dioxyde de carbone; et
un système de captage de carbone (100; 300; 400) selon l'une quelconque des revendications précédentes, et couplé en communication d'écoulement à ladite centrale à oxycombustion (102).

9. Système (102) selon la revendication 8, dans lequel ledit système de captage de carbone (100) comprend ladite seconde conduite de fluide de refroidissement (164) conçue pour recevoir le premier courant de fluide de refroidissement (198) évacué dudit second refroidisseur intermédiaire (134), ladite seconde conduite de fluide de refroidissement (164) étant couplée en communication d'écoulement audit refroidisseur final (116) et audit refroidisseur à variation de débit (136).

10. Système (102) selon l'une quelconque des revendications 8 ou 9, dans lequel ledit système de captage de carbone (300) comprend ladite seconde conduite de fluide de refroidissement (308) conçue pour recevoir le premier courant de fluide de refroidissement (348) évacué dudit condenseur de dioxyde de carbone (138), ladite seconde conduite de fluide de refroidissement (308) étant couplée en communication d'écoulement audit refroidisseur final (116) et audit refroidisseur à variation de débit (136).

11. Système (102) selon l'une quelconque des revendications 8 à 10, dans lequel ledit système de captage de carbone (400) comprend ladite seconde conduite de fluide de refroidissement (406) conçue pour recevoir le premier courant de fluide de refroidissement (446) évacué desdits premier (114) et second (134) refroidisseurs intermédiaires, ladite seconde conduite de fluide de refroidissement (406) étant couplée en communication d'écoulement audit refroidisseur final (116) et audit refroidisseur à variation de débit (136), ladite seconde conduite de fluide de refroidissement (406) comprenant une pompe de surpression (428) conçue pour augmenter la pression du second courant de fluide de refroidissement (468) .
